# EUROPÄISCHE PATENTSCHRIFT

(11) **EP 0 753 388 B1**
(45) Veröffentlichungstag und Bekanntmachung des Hinweises auf die Patenterteilung: **17.01.2001**
(21) Anmeldenummer: 96110274.6
(22) Anmeldetag: 26.06.1996
(51) Int. Cl.: B29C 43/30, B29C 43/24

(54) **Verfahren zur Herstellung einer mehrfarbigen thermoplastischen Kunststoffolie**
Method for the manufacturing of a multicolour thermoplastic film
Procédé pour la fabrication d'une feuille thermoplastique multicolore

(30) Priorität: 11.07.1995 DE 19525136
(43) Veröffentlichungstag der Anmeldung: 15.01.1997
(73) Patentinhaber: Benecke-Kaliko Aktiengesellschaft, D-30419 Hannover (DE)
(72) Erfinder: Eysel, Konrad, 73329 Kuchen (DE); Bargiel, Lothar, 73066 Uhingen (DE)
(74) Vertreter: Patentanwälte Thömen & Körner

(56) Entgegenhaltungen:
- EP-A- 0 061 385
- EP-A- 0 138 121
- DD-A- 272 308
- DE-A- 3 015 465
- DE-C- 4 114 575
- US-A- 3 155 750
- US-A- 3 328 503
- US-A- 4 937 034
- PLASTICS ENGINEERING, Bd. 43, Nr. 1, 1987, Seiten 29-32, XP002029905 GUST, S. J.: "Calendering is still king for high-volume PVC sheet"

## Beschreibung

Die Erfindung betrifft ein Verfahren zur Herstellung einer mehrfarbigen thermoplastische Kunststoffolie nach dem Oberbegriff des Anspruchs 1.

Aus der DE 36 37 524 C2 ist eine mehrfarbige thermoplastische Folie bekannt, die aus einem einfarbigen Grundmaterial und einer andersfarbigen Beimischung besteht. Die andersfarbige Beimischung umfaßt Partikel, die wesentlich größer als Pigmente sind und eine näherungsweise Kugelgestalt aufweisen. Bei der Erweichungstemperatur des Grundmaterials sind die andersfarbigen Beimischungen fest oder zumindest wesentlich zäher als das Grundmaterial. Die andersfarbige Beimischung ist außerdem kleiner als die Folienwandstärke, so daß die geometrische Form dieser Partikel im wesentlichen unverändert bleibt. Dadurch ergibt sich bei solchen Folien eine Farbsprenkelung.

Außerdem ist es bekannt, eine einfarbige Folie farbig zu bedrucken. Dabei ergibt sich jedoch aufgrund der endlichen Ausdehnung der Druckwalze eine Wiederholung des Musters. Da die Farbe nur auf die Oberfläche aufgebracht wird, ist die Folie zudem abriebempfindlich.

Ferner ist aus der DE 41 14 575 C1 ein Verfahren zur kontinuierlichen Herstellung eines richtungsfrei gemusterten, elastomeren Fußbodenbelags bekannt. Dort werden durch einen Schneckenextruder ohne Durchmischung mehrere verschiedenfarbige Streifen eines Elastomermaterials gefördert. Das Material wird durch eine Lochscheibe ausgetragen und dort zu Formstücken abgeschlagen. Die abgeschlagenen Formstücke gelangen zu einem Zwei-Walzen-Kalander, in dem sie zu einer homogenen Materialbahn verdichtet werden.

Weiterhin ist es aus der US-A-3 155 750 bekannt, einem Extruder Bahnmaterial und zusätzlich Additive zuzuführen und aus der US-A-4 937 034 bekannt, einem Extruder Pellets und zusätzlich Additive zuzuführen.

Schließlich zeigt die EP-A-0 061 385 ein Verfahren zur Herstellung von Bahnmaterial, bei dem auf ein Kunstoffmaterial kurz vor Eintritt in eine Kalanderwalzenanordnung ein Additiv aufgesprüht wird.

Der Erfindung liegt die Aufgabe zugrunde, ein Verfahren zu schaffen, das die Herstellung von mehrfarbigen thermoplastischen Kunststoffolien als Unikat ermöglicht, wobei die erzeugten Farbbereiche ineinander fließen und die Kunststoffolien zugleich unempfindlich gegen Abrieb sind.

Diese Aufgabe wird bei einem Verfahren nach dem Oberbegriff des Anspruchs 1 durch die im Kennzeichen des Anspruchs 1 angegebenen Merkmale gelöst. Zweckmäßige Weiterbildungen der Erfindung sind Gegenstand der abhängigen Ansprüche.

Durch die Zugabe des zusätzlichen Farbstoffmaterials in die Schneckenpreßvorrichtung, in der Fachsprache als Strainer bezeichnet, ergibt sich ein kurzer Mischzyklus mit dem Kunststoffgrundmaterial, so daß keine Zeit für eine innige Vermischung verbleibt. Die zunächst ansteigende Temperatur der ersten Kalanderwalzen führt zuerst dazu, daß sich das Farbstoffmaterial innerhalb des Kunststoffgrundmaterials etwas verteilen kann und durch die Friktion, die durch die ansteigende Umlaufgeschwindigkeit der Kalanderwalzen ausgeübt wird, verfließt. Die abfallende Temperatur der letzten Walze in Verbindung mit der nochmaligen Friktion an dieser Walze bewirkt, daß das Fließverhalten in Materialvorschubrichtung vermindert wird und Übergangsbereiche der verschiedenen Farben fixiert werden. Die letzte Kalanderwalze bestimmt somit das endgültige Erscheinungsbild der Kunststoffolie.

Eine Weiterbildung sieht vor, daß der aus der Siebscheibe austretende Materialstrang den ersten beiden Kalanderwalzen mäanderförmig pendelnd zugeführt wird. Weiterhin kann vorgesehen sein, daß das Farbstoffmittel unregelmäßig zugeführt wird. Durch beide Maßnahmen wird erreicht, daß sich die Farbänderungen auch in Querrichtung zur Materialvorschubrichtung erstrecken, wodurch sich unterschiedliche diagonal verlaufende Übergänge der Farbbereiche ergeben können, die zu einer sehr großen Vielfalt der erzeugten Unikate der Kunststoffolie führen.

Durch volumetrische oder gravimetrische Dosierung des Farbstoffmaterials läßt sich erreichen, daß die mittlere Tönung der farbigen Folie sehr genau eingehalten werden kann.

Das Farbstoffmaterial kann in pastöser Form, Granulatform, Pulverform oder in einer Kombination zweier oder aller dieser Formen zugeführt werden. Durch Auswahl einer oder mehrerer dieser Formen besteht eine weitere Variationsmöglichkeit der Farbstruktur der Kunststoffolie, da auch die Ausgangsformen des Farbstoffmaterials Einfluß auf die Verteilung und das Fließverhalten innerhalb des Kunststoffgrundmaterials aufweisen. Da das Verfahren somit nicht auf einzelne spezielle Ausgangsformen des Farbstoffmaterials beschränkt ist, kann die Entscheidung bei der Wahl des Farbstoffmaterials auch nach Verfügbarkeit oder Beschaffungskosten getroffen werden.

Auch bei der Wahl des Farbstoffmaterials in Granulatform sind mehrere Variationsmöglichkeiten gegeben. So können Fasern, Farbagglomerate, d.h. durch Haftmittel verbundene Pigmente, Farbkugelkonzentrate, d.h. zu Kugelform gewachsene Partikel versprühter Lacklösungen oder Metallicpulver verwendet werden.

Bei Verwendung mehrerer Farben kann das Farbstoffmaterial einzeln oder gemischt zugeführt werden. Dabei besteht die Möglichkeit, daß zur Herstellung einer aus Grundfarben zusammengesetzten Mischfarbe das Farbstoffmaterial einer Provenienz oder mehrerer Provenienzen vor der Zuführung intensiv gemischt wird.

Nachfolgend wird die Erfindung anhand eines Ausführungsbeispiels erläutert, das in der Zeichnung dargestellt ist. In der Zeichnung zeigen:
- Fig. 1: eine Vorrichtung zur Herstellung einer mehrfarbige thermoplastischen Kunststoffolie,
- Fig. 2: als Detail aus Fig. 1 einen Längsschnitt durch eine Schneckenpreßvorrichtung und
- Fig. 3: eine mit der beschriebenen Vorrichtung erzielte Oberflächenstruktur einer mehrfarbigen Kunststoffolie.

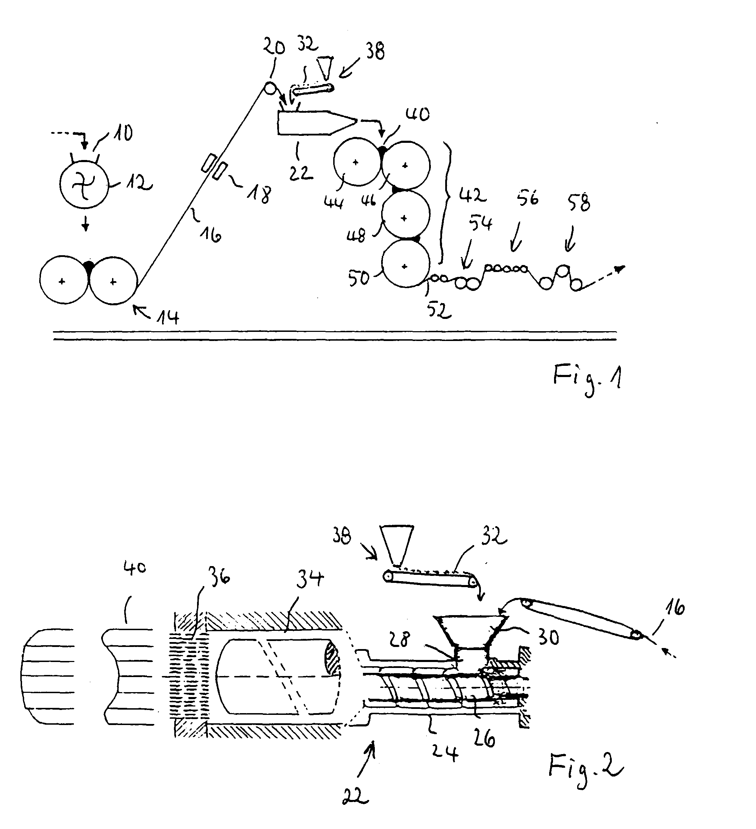

Fig. 1 zeigt in schematischer Seitenansicht eine Vorrichtung zur Herstellung einer mehrfarbigen thermoplastischen Kunststoffolie.

Kunststoffgrundmaterial gelangt über einen Zuführtrichter 10 in ein Rührwerk 12 und wird dort auf Erweichungstemperatur erwärmt. Von dort aus gelangt aufgeschmolzenes Material zu einem Walzwerk 14 und wird dort in ein Folienband 16 umgewandelt. Das Folienband 16 durchläuft ein Metallsuchgerät 18 zur Detektion von metallischen Verunreinigungen und wird anschließend über einen Folienbandzulauf 20 einer Schneckenpreßvorrichtung 22 zugeführt. Die Schneckenpreßvorrichtung 22, wie sie in Fig. 2 als Detail dargestellt ist, umfaßt einen Arbeitszylinder 24, in dem eine Vortriebsschnecke 26 rotiert. Eine Einfüllöffnung 28 ist mit einem Trichter 30 ausgestattet, über den sowohl das als Folienband 16 vorliegende Kunststoffgrundmaterial zugeführt wird als auch Farbstoffmaterial 32. Das Ende des Arbeitszylinders 24 der Schneckenpreßvorrichtung 22 ist in einen Stauraum 34 aufgeweitet, an dessen Austrittsende eine Siebscheibe 36 angeordnet ist.

Das Farbstoffmaterial 32 wird über eine Dosiervorrichtung 38 zugeführt, die eine gravimetrische oder volumetrische Meßvorrichtung umfaßt. Die aus der Siebscheibe 36 austretende Kunststoffmasse 40, die nunmehr aus Kunststoffgrundmaterial 16 und damit unvollständig vermischtem Farbstoffmaterial 32 besteht, gelangt unter einer mäanderförmigen Schwenkbewegung zu einer Kalanderwalzenanordnung 42 mit vier Kalanderwalzen 44, 46, 48, 50. Die Kalanderwalzen 44, 46, 48, 50 weisen unterschiedliche Umlaufgeschwindigkeiten auf, wobei die Umlaufgeschwindigkeit von der ersten 44 bis zur letzten Kalanderwalze 50 zunimmt. Die Kalanderwalzen 44, 46, 48, 50 sind beheizt und zwar von der ersten 44 bis zur dritten Kalanderwalze 48 mit aufsteigender Temperatur und von der dritten 48 zur vierten Kalanderwalze 50 mit abfallender Temperatur.

Die sich vor der ersten 44 und zweiten Kalanderwalze 46 bildende Materialwulst wird zunächst auf eine erste Dicke reduziert und anschließend zwischen der zweiten 46 und dritten 48 sowie der dritten 48 und vierten Kalanderwalze 50 auf die endgültige Foliendicke umgeformt. Durch die zunehmende Umlaufgeschwindigkeit der Kalanderwalzen 44, 46, 48, 50 wird das Material gleichzeitig gestreckt und die an der Oberfläche der entstehenden Kunststoffolie 52 auftretende Friktion mit der jeweils schneller laufenden Kalanderwalze bewirkt, daß die Verteilung des Farbstoffmaterials innerhalb des Kunststoffgrundmaterials beeinflußt wird und dadurch der charakteristische Farbverlauf erzielt wird.

Nach dem Verlassen der letzten Kalanderwalze 50 wird die farbige Kunststoffolie über weitere Walzen geführt. Dabei kann in einer Prägestation 54 eine Oberflächenprägung vorgenommen werden. In einer weiteren Station 56 und 58 wird die Folie getempert und schließlich abgekühlt.

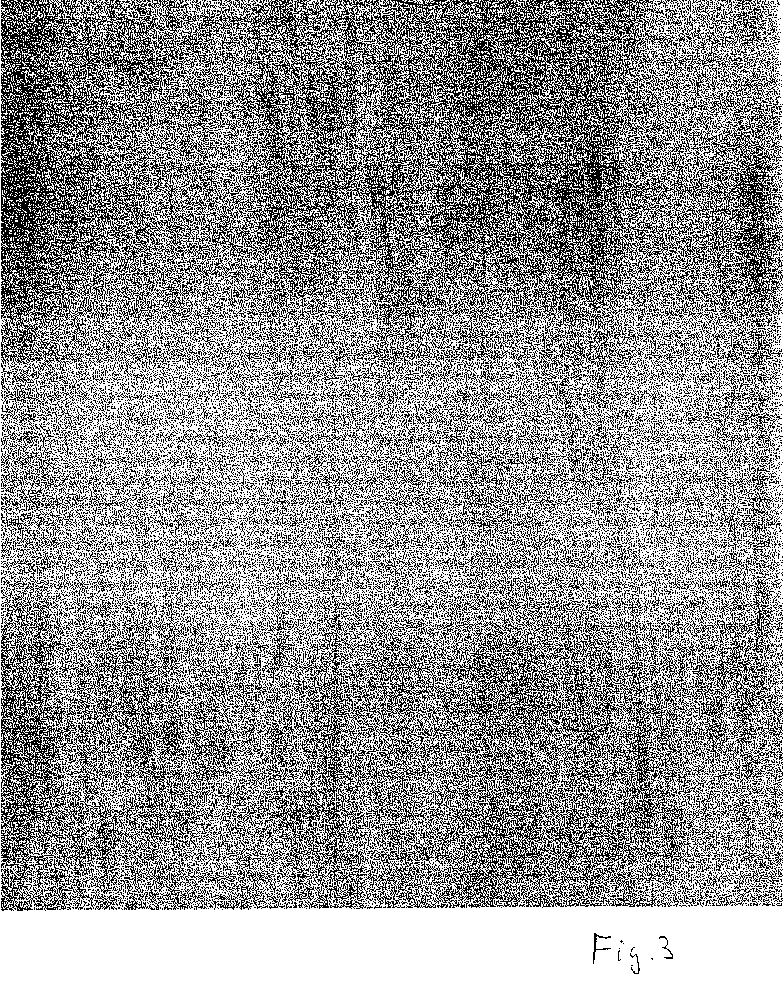

Fig. 3 zeigt eine mit der beschriebenen Vorrichtung erzielte Oberflächenstruktur einer mehrfarbigen Kunststofffolie. Als Kunststoffgrundmaterial dient hier ein einfarbiges z.B. weißes oder hellgraues Material. Das Farbstoffmaterial kann aus einer oder mehreren Farben bestehen, die entweder als Grundfarben oder als Mischfarben zugegeben sind. Es ergibt sich dabei eine farbige Oberflächenstruktur mit Farbbereichen hoher und niedriger Farbkonzentration sowie Zwischenwerten, die ineinander übergehen. Die Farbbereiche sind unregelmäßig verteilt, wobei Übergangsbereiche teilweise in diagonaler Richtung zur Materialvorschubrichtung verlaufen. Die Strukturen der Farbbereiche können zwar ähnlich sein, sie wiederholen sich jedoch nie exakt. Dadurch ergeben sich Folien, die eine einheitliche mittlere Tönung aufweisen, aber aufgrund ihres einzigartigen Farbverlaufs im Gegensatz zu bedruckten Folien Unikate darstellen.

## Patentansprüche

1. Verfahren zur Herstellung einer mehrfarbigen thermoplastischen Kunststoffolie, indem ein bis zur Erweichungstemperatur erwärmtes Kunststoffgrundmaterial (16) über eine Schneckenpreßvorrichtung (22) durch eine Siebscheibe (36) gedrückt und über eine beheizte Kalanderwalzenanordnung (42) auf Foliendicke umgeformt wird, wobei das Kunststoffgrundmaterial (16) durch aufeinanderfolgende Kalanderwalzen (44, 46, 48, 50) mit in Materialvorschubrichtung ansteigender Umlaufgeschwindigkeit und zuerst ansteigender und anschließend abfallender Temperatur gestreckt wird, dadurch gekennzeichnet, daß der Schnekkenpreßvorrichtung (22) zusätzlich Farbstoffmaterial (32) zugeführt und unter unvollständiger Vermischung mit dem Kunststoffgrundmaterial (16) gemeinsam mit diesem durch die Siebscheibe (36) gedrückt und über die Kalanderwalzenanordnung (42) auf Foliendicke umgeformt wird und daß durch die Friktion der aufeinanderfolgenden Kalanderwalzen (44, 46, 48, 50) und den Temperaturanstieg und anschließenden Temperaturabfall ungleichmäßige, fließende, in Materialvorschubrichtung gestreckte Farbbereiche und Farbübergänge erzeugt werden.

2. Verfahren nach Anspruch 1, dadurch gekennzeichnet, daß der aus der Siebscheibe (36) austretende Materialstrang (40) den ersten beiden Kalanderwalzen (44, 46) mäanderförmig pendelnd zugeführt wird.

3. Verfahren nach Anspruch 1 oder 2, dadurch gekennzeichnet, daß das Farbstoffmaterial (32) unregelmäßig zugeführt wird.

4. Verfahren nach einem der Ansprüche 1 bis 3, dadurch gekennzeichnet, daß das Farbstoffmaterial (32) volumetrisch oder gravimetrisch dosiert wird.

5. Verfahren nach einem der Ansprüche 1 bis 4, dadurch gekennzeichnet, daß das Farbstoffmaterial (32) in pastöser Form, Granulatform, Pulverform oder in einer Kombination zweier oder aller dieser Formen zugeführt wird.

6. Verfahren nach Anspruch 5, dadurch gekennzeichnet, daß das Farbstoffmaterial (32) in Granulatform als Fasern, Farbagglomerat, Farbkugelkonzentrat, Metallicpulver oder in einer Kombination zweier, mehrerer oder aller dieser Formen zugeführt wird.

7. Verfahren nach einem der Ansprüche 1 bis 6, dadurch gekennzeichnet, daß das Farbstoffmaterial (32) einzeln oder gemischt zugeführt wird.

8. Verfahren nach Anspruch 7, dadurch gekennzeichnet, daß das Farbstoffmaterial (32) einer Provenienz oder mehrerer Provenienzen vor der Zuführung intensiv gemischt wird.

## Claims

1. Method for the manufacture of a multicolour thermoplastic film, in that a plastic base material (16) heated to the softening point is pressed via a screw extruder means (2) through a screening disk (36) and by means of a heated calender roll system (42) is transformed to film thickness, the plastic base material (16) being stretched by successive calender rolls (44, 46, 48, 50) with a rotational speed rising in the material advance direction and initially rising and then falling temperature, characterized in that to the screw extruder means (22) is additionally supplied dye material (32) and accompanied by an incomplete mixing with the plastic base material (16) is pressed together therewith through the screening disk (36) and is transformed to film thickness by means of the calender roll system (42) and that by the friction of the successive calender rolls (44, 46, 48, 50) and the temperature rise and subsequent temperature fall non-uniform, flowing colour areas and colour changeovers stretched in the material advance direction are produced.

2. Method according to claim 1, characterized in that the material strand (40) passing out of the screening disk (36) is supplied in meander-like, reciprocating manner to the first two calender rolls (44, 46).

3. Method according to claim 1 or 2, characterized in that the dye material (32) is supplied irregularly.

4. Method according to one of the claims 1 to 3, characterized in that the dye material (32) is volumetrically or gravimetrically dosed.

5. Method according to one of the claims 1 to 4, characterized in that the dye material (32) is supplied in pasty, granulate or powder form or in a combination of two or all of these forms.

6. Method according to claim 5, characterized in that the dye material (32) is supplied in granulate form as fibres, dye agglomerate, dye spherical concentrate, metallic powder or in a combination of two, several or all of these forms.

7. Method according to one of the claims 1 to 6, characterized in that the dye material (32) is supplied separately or in mixed form.

8. Method according to claim 7, characterized in that the dye material (32) having one or more origins is intensely mixed prior to supply.

## Revendications

1. Procédé de fabrication d'une feuille thermoplastique multicolore, dans lequel une matière première plastique chauffée jusqu'à la température de ramollissement (16) est poussée par une extrudeuse (22), à travers une filière (36), et façonnée à l'épaisseur de la feuille par un dispositif à rouleaux de calandre chauffés (42), la matière première plastique (16) étant étirée à travers des rouleaux de calandre (44, 46 ; 48, 50), qui se succèdent, avec une vitesse de rotation qui augmente dans la direction d'avancement de la matière et une température d'abord croissante, puis décroissante, caractérisé en ce que l'extrudeuse (22) est alimentée en matière colorante additionnelle (32) et poussée en mélange incomplet avec la matière première plastique (16) et avec celle-ci à travers la filière (36), puis façonnée par le dispositif à rouleaux de calandre chauffés (42) à l'épaisseur de la feuille, et en ce que, par la friction des rouleaux de calandre successifs (44, 46, 48, 50) et la croissance de température, puis la baisse ultérieure, on produit des zones de couleur et des transitions de couleurs irrégulières et courantes étirées dans la direction d'avancement de la matière.

2. Procédé suivant la revendication 1, caractérisé en ce que le tronçon de matière (40), qui sort de la filière (36), alimente en forme de méandre oscillant les deux premiers rouleaux de calandre 44, 46).

3. Procédé suivant la revendication 1 ou 2, caractérisé en ce que la matière colorante (32) est alimentée d'une manière irrégulière.

4. Procédé suivant une des revendications 1 à 3, caractérisé en ce que la matière colorante (32) est dosée de manière volumétrique ou par gravimétrie.

5. Procédé suivant une des revendications 1 à 4, caractérisé en ce que la matière colorante (32) est alimentée sous forme pâteuse, sous forme de granulat ou d'une combinaison de ces deux ou d'autres formes.

6. Procédé suivant la revendication 5, caractérisé en ce que la matière colorante (32) est alimentée sous forme de granulat, comme des fibres, un agglomérat de couleurs, un concentré de billes de couleur, de poudre métallique ou en une combinaison de deux, de plusieurs ou de toutes ces formes.

7. Procédé suivant une des revendications 1 à 6, caractérisé en ce que la matière colorante (32) est alimentée seule ou mélangée.

8. Procédé suivant la revendication 7, caractérisé en ce que la matière colorante (32) d'une provenance ou de plusieurs provenances est mélangée intensivement avant l'alimentation.
